# EUROPEAN PATENT APPLICATION

(11) **EP 0 896 872 A1**
(43) Date of publication of application: **17.02.1999**
(21) Application number: 98901106.9
(22) Date of filing: 03.02.1998
(51) Int. Cl.: B29C 45/40

(54) **ELECTRIC VERTICAL INJECTION MOLDING MACHINE PROVIDED WITH PRODUCT EXTRUDING MEANS**

(30) Priority: 03.02.1997 JP 32621/97
(71) Applicant: FANUC LTD, Minamitsuru-gun, Yamanashi 401-0597 (JP)
(72) Inventor: ITO, Susumu, Tokyo 191-0065 (JP); NISHIMURA, Koichi, Shizuoka 410-1115 (JP); KUMASAKA, Masaaki, FANUC Manshonharimomi, Minamitsuru-gun, Yamanashi 401-0511 (JP)
(74) Representative: Billington, Lawrence Emlyn
(86) International application number: JP9800443
(87) International publication number: WO9833636

(57) **Abstract**

Motor-operated product ejectors (22, 21) are provided independently for both a stationary platen (2) and a moving platen (3). The product ejector (22) is actuated in the case where products remain only in a lower mold, while the product ejector (21) is actuated in the case where products remain only in a upper mold. Further, in the case where some of the products remain in the lower mold, while the rest remain in the upper mold, both the product ejectors (22, 21) are actuated to eject the products from both the lower mold and upper mold.

## Description

### TECHNICAL FIELD

The present invention relates to a motor-operated vertical injection molding machine furnished with product ejectors for automatically taking out molded articles from a mold.

### BACKGROUND ART

Conventionally known is a motor-operated vertical injection molding machine comprising a moving platen and a stationary platen arranged vertically overlapping each other to perform mold clamping and mold opening operations. In a vertical injection molding machine of a type such that the moving platen is located above the stationary platen, a mold half portion is mounted on the undersurface of the moving platen and the top surface of the stationary platen, individually. In the description to follow, the mold half portion (movable mold) attached to the moving platen and the mold half portion (stationary mold) attached to the stationary platen will be referred to as upper mold and lower mold, respectively.

A product ejector that is attached to the motor-operated vertical injection molding machine is provided only on the side of the stationary platen which mounts a lower mold. Accordingly, the mold must be designed so that products remain in the lower mold, not in the upper mold, when the mold is opened.

Therefore, in order to make the products to remain in the lower mold, in general, it is necessary only that the lower mold is provided with a core, while the upper mold is provided with a cavity, so that the product is allowed to cling to the core as resin shrinks. In some cases, however, the product may remain in the upper mold, instead of remaining in the lower mold.

Where the shape of the products to be molded is complicated, it may be impossible to provide the upper mold and the lower mold with the core and the cavity, respectively, due to restrictions on design. In the case of a multiple mold that can simultaneously mold a plurality of products of the same or different kinds, moreover, some of the products may possibly remain in the lower mold while the rest remains in the upper mold.

Therefore, in a motor-operated vertical injection molding machine, though providing a product ejector only on the side of the stationary platen and then releasing the products which remain in the lower mold mounted on the stationary platen, it may sometimes impossible to release normally all of the products from the mold.

### DISCLOSURE OF THE INVENTION

The object of the present invention is to provide a motor-operated vertical injection molding machine having product ejectors, designed so that all products can surely be released from a mold when the product remains in a lower mold, when the product remains in a upper mold, and, in the case of a multi-cavity mold, when some of the products remain in the lower mold and the rest remain in the upper mold.

In order to achieve the above object, a motor-operated vertical injection molding machine having product ejectors according to the present invention is designed so that a moving platen and a stationary platen are arranged vertically overlapping each other to perform mold clamping and mold opening operations, and a product ejector is provided for each of the stationary and moving platens.

According to the motor-operated vertical injection molding machine having product ejectors of the present invention, all products can be securely released from a mold when the product remains in a lower mold, when the product remains in a upper mold, and, in the case of a multi-cavity mold, when some of the product remains separately in the lower mold and the rest remain in the upper mold.

The product ejector for the stationary platen mounting the lower mold and the product ejector for the moving platen mounting with the upper mold may be driven either independently of each other, driven fully in synchronism with each other, or driven controlled in accordance with individual set values. Accordingly, even in the case where the thickness of the resin in the lower mold and that in the upper mold are different or in the case where the lower mold and the upper mold have different cooling characteristics, compression operation can be performed precisely in accordance with the properties of the mold to prevent formation of sink marks in the products and improve the transfer characteristics of the details of the mold.

### BRIEF DESCRIPTION OF THE DRAWINGS

FIG. 1 is a front view generally showing a motor-operated vertical injection molding machine with product ejectors according to one embodiment of the present invention, in which the product ejectors are indicated by dotted lines;
FIG. 2 is a top view of the motor-operated vertical injection molding machine of FIG. 1; and
FIG. 3 is a side sectional view of the principal part of the motor-operated vertical injection molding machine of FIG. 1.

### BEST MODE FOR CARRYING OUT THE INVENTION

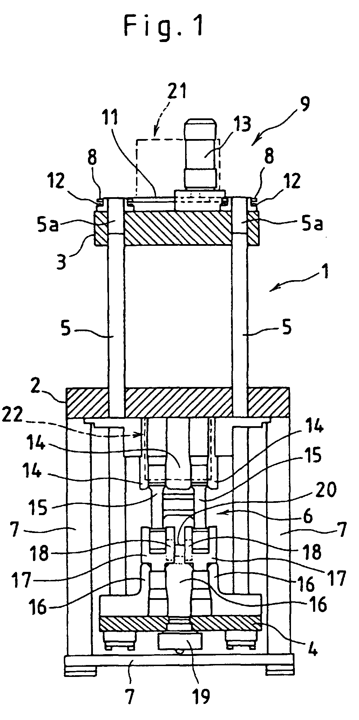

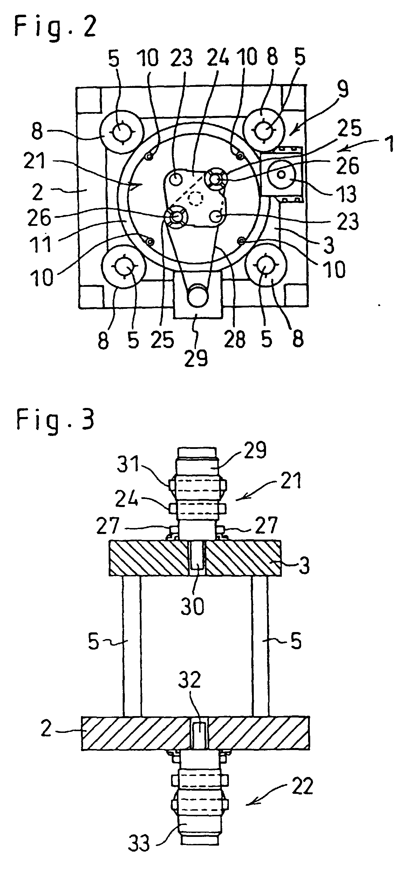

Referring first to FIGS. 1 and 2, an arrangement of a motor-operated vertical injection molding machine itself will be described.

A moving platen 3 and a rear platen 4 are respectively located above and under a stationary platen 2 that is fixed to a machine body frame 7. The moving platen 3 and the rear platen 4 are connected to each other by means of four tie bars 5 that penetrate the stationary platen 2. The positions where the four tie bars 5 penetrate the stationary platen 2 correspond respectively to the four corners of the stationary platen 2, which is substantially square. The machine body frame 7 is fixed to a floor.

A mold (not shown) is composed of two mold half portions, that is, a stationary mold and a movable mold. The former is attached to the top surface of the stationary platen 2, and the latter to the undersurface of the moving platen 3. An injection unit (not shown), which is disposed above the moving platen 3, moves in the direction (vertical direction) toward the moving platen 3, and a nozzle (not shown) of its injection cylinder plunges through a through hole (not shown) in the central portion of the moving platen 3 until coming into contact with the movable mold.

A mold clamping mechanism 6 is located between the stationary platen 2 and the rear platen 4. The mold clamping mechanism 6 is of a toggle type, the details of this element will be described later.

As described above, the injection molding machine according to this embodiment comprises the rear platen 4, mold clamping mechanism 6, stationary platen 2, and moving platen 3, which are stacked from bottom to top in the order named.

The mold clamping mechanism 6 includes three first staples 14 fixed to the stationary platen 2, a pair of first links 15 having their respective proximal ends rotatably mounted on the respective distal ends of the first staples 14, three second staples 16 fixed to the rear platen 4, and a pair of second links 17 having their respective proximal ends rotatably mounted on the respective distal ends of the second staples 16. The respective distal ends of the first links 15 and the second links 17 are rotatably connected to one another by means of pins (not shown).

Further, a bulging portion 18 is formed on one surface (reverse side in FIG. 1) of the second link 17, projecting in the depth direction. One end of a crosshead link 20 is rotatably connected to the bulging portion 18. The other end of the crosshead link 20 is rotatably connected with a crosshead (not shown), which is moved toward and away from the rear platen 4 by means of a ball screw and nut mechanism (not shown) provided at the central portion of the rear platen 4.

In addition to one set composed of aforesaid three first staples 14, pair of first links 15, three second staples 16, pair of second links 17, and crosshead link 20 shown in FIG. 1 another set of the same arrangement is located on the far side beyond the ball screw and nut mechanism situated on the central axis of the rear platen 4. Thus, the mold clamping mechanism 6 shown in FIG. 1 is of a double-toggle type.

A motor for mold clamping (not shown), which is fixed to the rear platen 4, rotates a pulley 19 by means of a timing belt or the like. The rotation of this pulley 19 causes a ball screw or a ball nut, which constitutes the ball screw and nut mechanism, to rotate, and the resulting rotary motion is converted into a linear motion, which causes the crosshead to make a linear movement.

If the motor for mold clamping is driven to cause the crosshead to get close to the rear platen 4, the first link 15 and the second link 17 bend to cause the rear platen 4 to approach the stationary platen 2 (i.e., to ascend). In consequence, the moving platen 3 moves away from the stationary platen 2, so that the movable mold (not shown) attached to the moving platen 3 and the stationary mold (not shown) attached to the stationary platen 2 separate from each other, thereby opening the mold. In contrast, if the crosshead is subjected to a motion causing it to separate from the rear platen 4, the first link 15 and the second link 17 in the bent state are brought to a stretched state, thereby making the rear platen 4 separate from the stationary platen 2 (i.e., descends). In consequence, the moving platen 3 approaches the stationary platen 2, thereby effecting mold clamping. When the mold clamping is completed, a lockup state is established, in which the first link 15 and the second link 17 are arranged in line (or stretched).

In the case of the toggle-type mold clamping mechanism, the mold clamping should always be completed in the lockup state with the first link 15 and the second link 17 arranged in line, so that the effective lengths of the tie bars 5 must be adjusted in accordance with the mold thickness. That is, since the distance between the rear platen 4 and the stationary platen 2 at the time of completion of the mold clamping is dependent on the mold thickness, the effective lengths of the tie bars 5 are changed according to the mold thickness so that the distance between the moving platen 3 and the stationary platen 2 at the time of completion of the mold clamping is adjusted.

Accordingly, an external thread 5a is cut in the upper end portion of each of the four tie bars 5. Part of the upper end portion of each tie bar 5, having the external thread 5a thereon, projects upward from the moving platen 3, and the projecting portion of the external thread 5a is in engagement with a die-height adjusting nut 8 that constitutes part of a mold thickness adjusting mechanism 9.

An internal thread that mates with the external thread 5a of each corresponding tie bar 5 is cut in the inner peripheral portion of each die-height adjusting nut 8. As shown in FIG. 2, on the other hand, a ring-shaped circumferential gear 11 is provided on the top surface of the moving platen 3 for rotation, the inner peripheral surface of the gear 11 being supported by four rollers 10 on the top surface. The circumferential gear 11 is in mesh with a tooth portion that is formed on the outer peripheral surface of the die-height adjusting nut 8.

The die-height adjusting nuts 8 themselves are attached individually to the four corners of the moving platen 3 by means of retainers 12 so as to be rotatable and axially immovable. Thus, a motor 13 for mold thickness fixed on the moving platen 3 is driven to rotate the ring-shaped circumferential gear 11 through a pinion (not shown) on the side of the motor 13. This causes the four die-height adjusting nuts 8 to be rotated simultaneously in the same direction, further causing the respective upper ends of the tie bars 5 to project or recede simultaneously from the moving platen 3 with the rear platen 4 and the moving platen 3 kept parallel to each other. In consequence, the effective lengths of the tie bars 5 are varied to change the distance between the rear platen 4 and the moving platen 3. Thereupon, the operation for mold thickness adjustment is finished.

The following is a description of product ejectors 21 and 22 that are attached to the motor-operated vertical injection molding machine described above.

In the present embodiment, the moving platen 3 and the stationary platen 2 are provided with the product ejectors 21 and 22, respectively, as indicated by dotted lines in FIG. 1. The product ejector 21 mounted on the moving platen 3 and the product ejector 22 mounted on the stationary platen 2 are driven individually by means of separate servomotors.

The first product ejector 21 mounted on the side of the moving platen 3 has an operating plate 24, which fixes an ejector rod 30 (FIG. 3) at the central portion of the undersurface thereof so as to extend downward. As shown in FIG. 2, the operating plate 24 is formed of a substantially rectangular plate. A ball nut 25 is fixed integrally with each of two opposite corner portions of the rectangle, while a guide rod passage hole (not shown) is formed in each of the remaining two opposite corner portions.

On the other hand, two guide rods 23 are fixed to the moving platen 3 so as to extend upward from the top surface of the moving platen 3. Further, two ball screws 26 are mounted on the moving platen 3 so as to be rotatable and axially immovable with respect to the moving platen 3 and to extend upward from the top surface of the moving platen 3. A pulley 27 is fixed to the lower end portion of each of the ball screws 26. The ball nuts 25 fixed to the operating plate 24 of the first product ejector 21 engages, by threads, with their corresponding ball screws 26.

A first servomotor 29 is fixed to the top surface of the moving platen 3. A pulley of the servomotor 29 and the pulleys 27 fixed individually to the two ball screws 26 are wound with a timing belt 28. When the first servomotor 29 is driven, therefore, the two ball screws 26 simultaneously rotate in the same direction, so that the ball nuts 25 move up and down relatively to the ball screws 26. The operating plate 24 and the ejector rod 30 also move up and down together with the ball nuts 25.

When the first servomotor 29 is driven, the ejector rod 30 descends passing through the through hole in the moving platen 3 until its lower end reaches a level further below the undersurface of the moving platen 3, as shown in FIG. 3. When the first servomotor 29 is driven in the reverse direction, the ejector rod 30 rises from this position so that its lower end is situated in the through hole in the moving platen 3.

A knockout bar 31 for regulating the limit of ascending motion of the operating plate 24 is fixed to the upper end portion of each guide rod 23 so as to bridge the guide rods 23 on the opposite sides.

The second product ejector 22 mounted on the stationary platen 2 has the same construction as the first product ejector 21 mounted on the moving platen 3 described above. As shown in FIG. 3, however, the second product ejector 22 is attached to the undersurface of the stationary platen 2, and is fixed to the stationary platen 2 so that its ejector rod 32 is fixed to the stationary platen 2 so as to extend upward from the central portion of the top surface of an operating plate. When a second servomotor 33 is driven, therefore, the ejector rod 32 ascends through a through hole in the stationary platen 2 until its upper end reaches a level above the top surface of the moving platen 3, as shown in FIG. 3.

As described above, the first product ejector 21 mounted on the moving platen 3 is driven by means of the first servomotor 29 that is fixed to the moving platen 3, while the second product ejector 22 mounted on the stationary platen 2 is driven by means of the second servomotor 33 that is fixed to the stationary platen 2.

These two servomotors 29 and 33 are controlled independently (or mutually synchronized) by multi-task operation by means of a numerical control device (not shown) of the motor-operated vertical injection molding machine 1. The first and second servomotors 29 and 33 are driven according to various values that are set separately for the first and second product ejectors 21 and 22. These set values include the following values, for example.
- Frequency of repetition of projecting and receding operation of the ejector and repetition time interval,
- Projection completion position, recession completion position, projecting speed, and receding speed of the ejector rod for one cycle or each of a plurality of cycles of ejector projecting operation.

As described above, the first and second servomotors 29 and 33 are driven in accordance with the separate set values. Thus, for example, when the product always remains only at the side of the lower mold (i.e., mold fixed on the side of the stationary platen 2) when the mold is open, it is sufficient to drive only the second servomotor 33 for actuating only the second product ejector 22 to release the products. In contrast, when the product always remains only at the side of the upper mold (i.e., mold fixed on the side of the moving platen 3), it is sufficient to drive only the first servomotor 29 for actuating only the first product ejector 21 to release the product. Moreover, in the case where some of a plurality of products remain in the lower mold, while the rest remain in the upper mold, the first and second servomotors 29 and 33 are driven to actuate both the first and second product ejectors 21 and 22 according to set values that correspond to the degree of the remaining. By doing so, all the products remaining in the upper and lower molds can be released normally from the molds and recovered.

The respective ejector rods 32 and 31 of the first and second product ejectors 22 and 21 are used not only to drive ejector plates and ejector pins of the lower and upper molds to eject the products from the mold, but also to move some of cores and cavity blocks in the lower and upper molds in the mold clamping or mold opening direction to move during the mold clamping operation, thereby reducing the resin volume in the mold to improve the transfer characteristics of the details of the mold (a kind of compression processing) and preventing formation of sink marks, or to perform precision machining such as gate cutting operation.

The operation of this type is accomplished by causing the ejector rods to actuate by stages a plurality of ejector plates that are arranged spaced and overlapping one another. The processes of this operation are already known in the technical field of injection molding operation. In general, a first-stage ejector plate is fitted with a core or a cavity block or the like for mold transfer, prevention of formation of sink marks, or gate cutting, while a second-stage ejector plate is fitted with an ejector pin that is utilized for actual product releasing operation. That is, the first-stage ejector plate is first driven to carry out mold transfer, compression operation (prevention of sink marks), or gate cutting. Then, the ejector rods are further projected to actuate the ejector pin of the second-stage ejector plate to eject the products.

Some machines are provided with only the first-stage ejector plate and designed so that the core or the cavity block itself used for mold transfer or compression operation can be further projected to effect product ejecting operation.

As described above, the first and second product ejectors 22 and 21 can be either driven independently of each other, or driven fully in synchronized with each other, or drivingly controlled in accordance with individual set values. In the case where the tickness of the resin in the lower mold and that in the upper mold are different or in the case where the lower mold and the upper mold have different cooling characteristics (or, in the case where there exists an difference in the degree of formation of sink marks in the products or in the transfer characteristics of the details of the mold), in particular, therefore, the product ejectors 22 and 21 of the lower mold and the upper mold can be made independently to perform optimum compression operation for the lower mold and the upper mold, thus ensuring convenience for the molding operation.

## Claims

1. A motor-operated vertical injection molding machine having product ejectors, in which a moving platen and a stationary platen are arranged vertically overlapping each other to perform mold clamping and mold opening operations, comprising:
a product ejector provided for said stationary platen; and
another product ejector provided for said moving platen.

2. A motor-operated vertical injection molding machine with a product ejector according to claim 1, wherein said product ejector provided for the moving platen is driven by means of a first motor fixed to the moving platen, and said product ejector provided for the stationary platen is driven by means of a second motor fixed to the stationary platen.

3. A motor-operated vertical injection molding machine with a product ejector according to claim 2, wherein said first and second motors are driven in response to control commands from a control device for controlling the motor-operated vertical injection molding machine.
